(19) **Europäisches Patentamt**

**European Patent Office**

**Office européen des brevets**

(11) Veröffentlichungsnummer: **0 234 279 B1**

(12) **EUROPÄISCHE PATENTSCHRIFT**

(45) Veröffentlichungstag der Patentschrift: **12.08.92**

(21) Anmeldenummer: **87100843.9**

(22) Anmeldetag: **22.01.87**

Die Akte enthält technische Angaben, die nach dem Eingang der Anmeldung eingereicht wurden und die nicht in dieser Patentschrift enthalten sind.

(51) Int. Cl.⁵: **C04B 2/04**, C04B 18/08, //B01J19/28

(54) **Verfahren und Vorrichtung zur Konditionierung von Kraftwerksreststoffen.**

(30) Priorität: **14.02.86 DE 3604760**

(43) Veröffentlichungstag der Anmeldung:
**02.09.87 Patentblatt 87/36**

(45) Bekanntmachung des Hinweises auf die Patenterteilung:
**12.08.92 Patentblatt 92/33**

(84) Benannte Vertragsstaaten:
**BE DE ES FR GB IT**

(56) Entgegenhaltungen:
**DE-C- 270 649**        **FR-A- 408 852**
**FR-A- 1 229 036**      **FR-A- 2 539 734**
**US-A- 2 149 269**      **US-A- 3 160 395**
**US-A- 3 296 711**

(73) Patentinhaber: **Eirich, Hubert**
**Sandweg 16**
**W-6969 Hardheim(DE)**

Patentinhaber: **Eirich, Paul**
**Bahnhofstrasse 11**
**W-6969 Hardheim(DE)**

Patentinhaber: **Eirich, Walter**

**Spessartweg 16**
**W-6969 Hardheim(DE)**

(72) Erfinder: **Dürr, Herbert**
**Bensheimer Strasse 5**
**W-6806 Viernheim(DE)**
Erfinder: **Eirich, Hubert**
**1. Sandweg 16**
**W-6969 Hardheim(DE)**
Erfinder: **Eirich, Paul**
**Bahnhofstrasse 11**
**W-6969 Hardheim(DE)**
Erfinder: **Eirich, Walter**
**Spessartweg 18**
**W-6969 Hardheim(DE)**

(74) Vertreter: **Weber, Dieter, Dr. et al**
**Dr. Dieter Weber und Dipl.-Phys. Klaus Seiffert Patentanwälte Gustav-Freytag-Strasse 25 Postfach 6145**
**W-6200 Wiesbaden 1(DE)**

EP 0 234 279 B1

## Beschreibung

Die Erfindung betrifft ein Verfahren zur Konditionierung von Kraftwerksreststoffen in Form von Schüttgut, insbesondere der Filterasche von Kraftwerken, durch Löschen des Kalkanteils unter überstöchiometrischer Feuchtigkeitszugabe, mit kontinuierlicher Zuführ- und Austragsmöglichkeit des zu verarbeitenden bzw. verarbeiteten Materials, wobei das zugeführte Schüttgut nacheinander verschiedene, im wesentlichen räumlich getrennte Behandlungszonen durchläuft und in jeder Behandlungszone unterschiedlich behandelt, zur Reaktion gebracht und kontrolliert entlang einer Reaktionsstrecke transportiert wird.

Ein derartiges Verfahren ist aus der FR-C-1,229,036 bekannt.

Darüberhinaus betrifft die vorliegende Erfindung auch eine Vorrichtung zur Durchführung eines solchen Verfahrens zur Konditionierung von Kraftwerksreststoffen in Form von Schüttgut, insbesondere der Filterasche von Kraftwerken, durch Löschen des Kalkanteiles unter Feuchtigkeitszugabe und durch weiteres Anfeuchten des Schüttgutes, wobei die Vorrichtung einen rotierenden Reaktionsbehälter, Zufuhr- und Austragseinrichtungen für das Schüttgut und eine Einrichtung für die Zufuhr von Feuchtigkeit aufweist. Eine solche Vorrichtung ist aus der FR-A-2,539,734 bekannt.

Für die Konditionierung von Kraftwerksasche wird eine Vielzahl von unterschiedlichen Anlagen und Vorrichtungen eingesetzt. Die meisten dieser Vorrichtungen wurden ursprünglich für andere Produkte und Aufbereitungsverfahren entwickelt, so daß ihre Anwendung bei Kraftwerksasche in vielen Fällen unbefriedigende verfahrenstechnische Ergebnisse oder eine ungünstige Wirtschaftlichkeit aufweist.

Bekannt sind sogenannte Mischreaktoren, die alternativ im Chargenbetrieb oder kontinuierlich betrieben werden können. Bei den Mischreaktoren werden die zu konditionierenden Materialien in einem um eine nahezu senkrechte Achse rotierenden Behälter mittels Misch- und Rührwerkzeugen bearbeitet. Diese Maschinen liefern ein Produkt mit sehr guter Homogenität. Sie erlauben eine gute Regelung bei der Beschickung und garantieren somit eine gleichbleibende Verweilzeit. Der Selbstreinigungseffekt dieser Maschinen macht sie gegen Anbackungen unempfindlich. Nachteilig ist jedoch, daß diese Maschinen aufgrund der heute verfügbaren Technik nicht zu wirtschaftlichen Kosten beliebig groß gebaut werden können.

Weiterhin sind auch - speziell für die Konditionierung von Flugasche - horizontale Trommelmischer mit stillstehendem Mischbehälter bekannt. Diese Maschinen haben ebenfalls technische und preisliche Begrenzungen in der Baugröße. Außerdem neigt die in der waagerecht liegenden Trommel rotierende Mischwerkzeugwelle stark zu Anbackungen. Zur Bestreichung der gesamten Mischbehälterfläche ist eine große Anzahl von Mischwerkzeugen erforderlich. Diese Werkzeuge verursachen einen hohen Verschleiß und unterstützen das Anbacken von Mischgut an der Werkzeugwelle und an der Behälterinnenwand. Darüberhinaus ist die betriebssichere Abdichtung der Lagerung der Werkzeugwelle auf den Stirnseiten des Behälters problematisch. Die indirekte Messung von Mischguteigenschaften durch Infrarot- oder Mikrowellenmeßgeräte ist nur schwierig oder gar nicht möglich.

Aus der Kalksandstein-Industrie sind siloähnliche, stillstehende, zylindrische Behältnisse mit einer entsprechenden Austragvorrichtung bekannt. Auch diese sind versuchsweise für die Konditionierung von Asche eingesetzt worden. Zwar erlauben diese Reaktoren die Bereitstellung großer Reaktionsvolumina mit relativ geringen Investitionskosten, jedoch sind die sich aus der großen Bauhöhe der Reaktoren ergebenden Kosten für das Gebäude und die Beschickungslage sehr groß. Da diese Reaktoren keinerlei Rührwerkzeuge besitzen, sind sie sehr empfindlich gegen Verbackungen. Die geringste Überfeuchtung des Reaktorinhaltes führt zu Verbackungen, die nur mit erheblichem Aufwand manuell entfernt werden können.

Diese Reaktoren erlauben zudem keine Messung der fortschreitenden Reaktion, so daß es nicht möglich ist, während der Verweilzeit im Reaktor Korrekturen vorzunehmen.

Ebenfalls aus der Kalksandstein-Industrie sind sogenannte Löschtrommeln bekannt. Hierbei handelt es sich meist um zylindrische oder doppelkonische Behälter, die um ihre Mittelachse rotieren. Diese Behälter sind druckfest abgeschlossen; die Zufuhr von Wasser und/oder Dampf erfolgt durch Bohrungen in der Lagerwelle. Diese Geräte erlauben ausschließlich Chargenbetrieb. Hierdurch wird eine aufwendige maschinentechnische Einrichtung für die Beschickung, Entleerung und Entsorgung der Anlage erforderlich. Eine berührungslose Messung der Eigenschaften des Trommelinhaltes sowie der Einsatz von Rührwerkzeugen für die Mischung und Reinigung der Behälterwände sind ebenfalls nicht möglich.

Schließlich ist eine Löschtrommel bekannt, die einen um seine Längsachse rotierenden Trommelkörper mit einer geschlossenen und einer offenen Stirnwand aufweist. Die Trommelachse ist gegenüber der Vertikalen geneigt, der Füllgrad wird durch die Neigungsverstellung eingestellt. Beschickung und Entleerung der Trommel erfolgen durch die gleiche offene Stirnseite. Es kann dadurch nicht ausgeschlossen werden, daß frisch zugegebenes Material unreagiert direkt wieder ausgetragen wird.

Zwar versucht man, diesen Nachteil dadurch zu vermeiden, daß die Beschickungseinrichtung bis zum Trommelende mit der geschlossenen Stirnwand hineinragt, diese Maßnahme begrenzt jedoch deutlich die Länge und damit auch das Volumen der Trommel, da die Beschickungseinrichtung nicht beliebig weit freitragend in die Trommel hineinragen kann. Auch die für die Trommelwand vorgesehenen und zur Vermeidung von Anbackungen notwendigen Abstreifer begrenzen die Länge der Trommel, da die beim Abstreifen von Krusten bzw. Anbackungen entstehenden Kräfte nicht über beliebig lange freitragende Arme konstruktiv sinnvoll aufgenommen werden können.

Andererseits erfordern jedoch das zunehmende Umweltbewußtsein und die Einhaltung neuer, einschlägiger Vorschriften zur Deponierung von Kraftwerksreststoffen eine entsprechende Konditioniertechnik für diese Stoffe. Kraftwerksreststoffe sind im wesentlichen Filterasche, Naßasche und Rückstände aus der Rauchgasentschwefelung.

Unter Konditionierung versteht man dabei im allgemeinen das Kühlen der Filteraschen auf Temperaturen unter 100°C, das Löschen von in der Asche enthaltenem Kalk (CaO) und das Anfeuchten der Aschen bis zu einer staubfreien krümeligen Struktur für optimale Verdichtbarkeit und Handhabung, d.h. für den Transport, das Umladen, Verdichten und Deponieren der konditionierten Reststoffe.

Die für die Konditionierung erforderliche Wasserzugabe erfolgt durch die Zugabe entweder von Frischwasser, von Rezeptwasser des Kraftwerkskreislaufes, von Naßasche oder von wasserhaltigen Rückständen aus der Rauchgasentschwefelung. Häufig erfolgt die Wasserzugabe auch kombiniert aus diesen verschiedenen Quellen.

Besondere Probleme bereitet die Konditionierung von Aschen mit hohem CaO-Gehalt. Der hohe CaO-Gehalt ist zum einen durch bestimmte natürliche Kohlevorkommen bedingt, die Aschen mit einem CaO-Gehalt bis zu 70 % erzeugen können, zum anderen wird in vielen Feuerungsanlagen auch das sogenannte Trockenadditivverfahren (TAV) praktiziert, bei welchem der Kohle Kalkstein zugemischt wird, welcher den in der Kohle enthaltenen Schwefel zu $CaSO_4$ (Gips) umsetzen soll, gleichzeitig jedoch auch CaO entstehen läßt.

Wegen der unterschiedlichen Zusammensetzung der Rohkohle schwanken sowohl der Gips- als auch der CaO-Gehalt der Asche.

Um die Asche jedoch umweltverträglich lagern zu können, ist es unbedingt erforderlich, den gebrannten Kalk (CaO) durch Zugabe von Wasser zu löschen.

Das aus gelöschtem Kalk $Ca(OH)_2$ und Gips $(CaSO_4)$ gebildete Gemisch hat stark hydraulische Eigenschaften, d.h. es neigt zu Verfestigung auch unter einem Überschuß von Wasser und bei Luftabschluß. Während also einerseits die Zugabe einer gewissen Mindestmenge von Wasser unbedingt erforderlich ist, um den gebrannten Kalk zu löschen, kann bei einem Überschuß von Wasser andererseits die Gefahr von Anbackungen des Kalk-Gips-Gemisches bestehen, wodurch die Verarbeitung bzw. Konditionierung der Kraftwerksreststoffe sehr erschwert wird.

Der Einsatz der erwähnten und im allgemeinen aus anderen technischen Bereichen bekannten Geräte und zugehörigen Verfahren stößt daher auf Grenzen entweder hinsichtlich der Wirtschaftlichkeit oder aber hinsichtlich der technischen Durchführbarkeit.

Die unterschiedlichen Behandlungen, die das Schüttgut bei dem Verfahren gemäß der FR-C-1,229,036 erfährt, sind im wesentlichen das Mahlen des Schüttgutes und das anschließende Befeuchten mit Wasser. Da die Wasserzugabe erst nach dem Mahlen erfolgt, wo keine intensive Durchmischung mehr stattfindet, läuft die Reaktion relativ langsam ab, wobei die Temperatur nur schwer zu kontrollieren ist. Ein Agglomerat ist mit einem solchen Verfahren offenbar nicht zu erzeugen. Die Konsistenz des Materials muß im wesentlichen staubförmig bleiben, damit das Material in der dargestellten Weise über Schneckenförderer ausgetragen und separiert werden kann.

Bei der in der FR-A-2,539,734 dargestellten Vorrichtung sind zwei Schneckenförderer unmittelbar hintereinandergeschaltet, so daß beide Schneckenförderer den gleichen Durchsatz haben müssen und eine unterschiedlich intensive mechanische Bewegung in den aufeinanderfolgenden Schneckenförderern nicht möglich ist. Auch in diesen Schneckenförderem kann keine Agglomeration stattfinden, sondern das Material muß im wesentlichen staubförmig und trocken gehalten werden, damit es nicht zu Anbackungen kommt. Die Wasserzugabe darf also nur sehr vorsichtig in nicht oder nur wenig überstöchiometrischer Menge erfolgen, ohne daß Feuchtigkeit in dem Material zurückbleibt.

Gegenüber diesem Stand der Technik liegt der vorliegenden Erfindung die Aufgabe zugrunde, ein Verfahren und eine Vorrichtung mit den oben genannten Merkmalen zu schaffen, mit welchen die kontinuierliche Verarbeitung von Kraftwerksreststoffen zu einem gut lager- und transportfähigen und leicht weiterzuverarbeitenden Produkt schnell und effizient möglich ist.

Hinsichtlich des Verfahrens wird diese Aufgabe dadurch gelöst, daß das Schüttgut während des gesamten Durchlaufes mit in jeder Behandlungszone unabhängig einstellbarer Intensität mechanisch bewegt wird und daß in der ersten Behandlungszone eine intensive Durchmischung des Schüttgutes mit Wasser erfolgt, während die Reaktion unter weiterer mechanischer Bewegung des Schüttgutes in der zweiten Behandlungszone stattfindet, wobei entlang der Reaktionsstrecke bei Bedarf die Zugabe einer Korrekturwassermenge vorgesehen ist und wobei in der dritten Behandlungszone eine Agglomeration des Materials erfolgt. Bezüglich der Vorrichtung wird die der Erfindung zugrundeliegende Aufgabe dadurch gelöst, daß der Reaktionsbehälter aus mindestens einer an beiden Stirnseiten im wesentlichen offenen zylindrischen Trommel, welche um eine gegen die horizontal leicht geneigte Achse rotiert, und/oder aus mindestens einer konischen, kegelstumpfförmigen Trommel, welche um eine horizontale oder gegen die horizontale leicht geneigte Achse rotiert, besteht, daß das Verhältnis der Länge zum größten Innendurchmesser der Trommel größer als 2:1, vorzugsweise größer als 4:1 ist, und daß die Trommelinnenwand zumindest über einen Teil der Trommellänge mit elastischem Material beschichtet ist, und daß vor der Eintrittsöffnung der Trommel oder im Eingangsbereich der Trommel Mischeinrichtungen und eine Wasserzufuhr für das Mischen des Schüttgutes mit Wasser vorgesehen sind.

Die Aufteilung in unterschiedliche, räumlich getrennte Behandlungszonen ermöglicht die Kontrolle des jeweiligen Zustandes des Schüttgutes und der darin ablaufenden Reaktionen, und der kontrollierte Weitertransport entlang der Reaktionsstrecke ermöglicht die Einstellung der jeweiligen Verweilzeiten in den einzelnen Behandlungszonen, so daß hierdurch beispielsweise eine ungenügende oder zu weitgehende Befeuchtung des Materials und das Anbacken an Gefäßwanden oder Werkzeugen vermieden wird.

Das Verfahren wird dabei so gestaltet, daß es in einem mechanisch bewegten Schüttgutbett mit einstellbarer Intensität mechanisch bewegt wird.

Im Unterschied zu bekannten Verfahren wird also die Intensität der mechanischen Behandlung dem jeweiligen Zustand des Schüttgutes angepaßt und in den einzelnen Behandlungszonen entsprechend variiert. Eine mechanische Behandlung erweist sich im vorliegenden Fall als weniger aufwendig, kostengünstiger und praktikabler als andere denkbare, z.B. rein chemische Verfahren.

Zweckmäßigerweise wird bei dem erfindungsgemäßen Verfahren am Anfang und am Ende der Reaktionsstrecke die Feuchtigkeit und/oder die Temperatur und/oder die chemische Beschaffenheit des Reaktionsgemisches gemessen und in Abhängigkeit von den erhaltenen Meßwerten mindestens eine Korrekturdosierung an beliebiger Stelle entlang der Reaktionsstrecke vorgesehen, wobei die Korrektur so frühzeitig erfolgt, daß sie bis zum Verlassen des Materials aus der Anlage wirksam wird.

Entsprechende Möglichkeiten bestehen bei den bisher verwendeten Verfahren zur Aschekonditionierung nicht. Die optimale und schnelle Behandlung des Schüttgutes wird so in vorteilhafter Weise verbessert.

Das bevorzugte Verfahren ist dadurch gekennzeichnet, daß die einzelnen Behandlungszonen im wesentlichen aus einer Zuführ- und Mischungszone (I), einer Hauptreaktionszone (II) und einer Agglomerations- und Austragszone (III) bestehen.

Die Aufteilung in drei derartige Zonen erweist sich für eine sichere Konditionierung, d.h. insbesondere für vollständiges Löschen des CaO-Anteils ohne Anbacken des Kalk-Gips-Gemisches als ausreichend und ist vor allem auch mit der Forderung nach dem schnellen Durchsatz großer Mengen verträglich. Dabei können die einzelnen Behandlungszonen selbstverständlich in ihren Randbereichen auch kontinuierlich ineinander übergehen. Wesentlich ist lediglich, daß es drei eindeutig verschiedene, durch die genannten Merkmale gekennzeichnete Behandlungszonen gibt, in denen das Material überwiegend eine für diese Zone charakteristische Behandlung erfährt.

Zweckmäßigerweise werden bei dem erfindungsgemäßen Verfahren dem Schüttgut zur Erhöhung des Feuchtigkeitsgehaltes Naßasche oder wasserhaltige Rückstände aus der Rauchgasentschwefelung zugeführt.

Diese Stoffe fallen ohnehin beim Betrieb entsprechender Anlagen in einem Kraftwerk an und können so einer sinnvollen Verwendung zugeführt werden.

Sofern die Zugabe von Naßasche oder Rückständen aus der Rauchgasentschwefelung nicht ausreichend ist oder nicht die gewünschte Konsistenz bewirkt, ist es vorteilhaft, wenn, wie durch die Erfindung vorgesehen, zur Erhöhung des Feuchtigkeitsgehalts frisches oder mit Zusätzen versehenes Prozeßwasser zugeführt wird. Frisches Prozeßwasser trägt insbesondere zur Kühlung des Schüttgutes bzw. der heißen Asche bei, mit Zusätzen versehenes Prozeßwasser ist teilweise ein ohnehin vorhandenes Abfallprodukt und kann mit Hilfe der Zusätze bestimmte Reaktionen je nach Wunsch beschleunigen oder verlangsamen.

Dabei kann es vorteilhaft sein, wenn erfindungsgemäß das Prozeßwasser durch Abwärme der Hauptreaktionszone (II) oder des vorgeschalteten Kraftwerkes vorgeheizt wird.

Die Vorheizung des Wassers dient in erster Linie der Beschleunigung der ablaufenden Reaktionen und begünstigt so einen schnellen Durchsatz. Bei dem erfindungsgemäß bevorzugten Verfahren werden die physikalischen und/oder chemischen Eigenschaften des Reaktionsgemisches berührungslos gemessen.

Entsprechende Meßsonden sind dementsprechend Verschmutzungen und/oder Beschädigungen wenig oder gar nicht ausgesetzt.

Weiterhin wird ein Verfahren bevorzugt, bei welchem vor dem Austrag größere Schüttgutstücke zerkleinert werden.

Durch diese Maßnahme wird die weitere Behandlung, insbesondere die Verdichtbarkeit des konditionierten Materials erleichtert bzw. verbessert.

Zweckmäßigerweise wird bei dem erfindungsgemäßen Verfahren vorgesehen, daß die Zufuhr von Schüttgut in Abhängigkeit von der Feuchtigkeit und/oder Temperatur des Materials am Ende der Reaktionsstrecke gesteuert wird. Diese Maßnahme trägt zur Optimierung des erfindungsgemäßen Verfahrens hinsichtlich der Maximierung des Durchsatzes bei gleichzeitiger Sicherstellung der vollständigen Konditionierung am Gerät bei. Das Siloverfahren muß so gesteuert werden, daß keine Anbackungen entstehen. Das erfindungsgemäße Verfahren ist dagegen aufgrund der ständigen mechanischen Bewegung und noch zu beschreibender apparativer Maßnahmen unempfindlich.

Diesem Zweck dienen auch zwei weitere Merkmale, die das erfindungsgemäße Verfahren zweckmäßigerweise aufweist, nämlich, daß die Zufuhr von Schüttgut in Abhängigkeit vom Füllgrad der Hauptreaktionszone (II) gesteuert wird und daß die Transportgeschwindigkeit in Abhängigkeit von Temperatur und/oder Feuchtigkeit und/oder chemischer Beschaffenheit am Ausgang der Hauptreaktionszone (II) oder der Agglomerationszone (III) gesteuert wird.

In günstigen Fällen kann durch jedes der genannten Merkmale allein das zugrundeliegende Optimierungsproblem gelöst werden, es kann jedoch auch erforderlich sein, daß zur Optimierung des Verfahrens mehrere oder alle der genannten Verfahrensmerkmale einzusetzen sind.

Auf jeden Fall läßt sich bei richtiger Einstellung der Parameter Feuchtigkeit, Temperatur und Transportgeschwindigkeit das Verfahren derart durchführen, daß der CaO-Anteil vollständig gelöscht wird, ohne daß es zu Anbackungen kommt und daß gleichzeitig eine maximale Menge von Schüttgut bzw. Asche verarbeitet wird.

Bei der erfindungsgemäßen Vorrichtung gestattet es die Länge einer derartigen Trommel im Verhältnis zum Durchmesser, in dieser Trommel verschiedene Behandlungszonen einzurichten. Dabei ist es jedoch auch möglich, der Trommel weitere Einrichtung vor- bzw. nachzuschalten, durch welche jeweils eine der Behandlungszonen definiert ist. Die Neigung der Achse der Trommel und/oder die konische, kegelstumpfförmige Ausführung der Trommel bewirkt bei Rotation derselben den Transport des darin befindlichen Schüttgutes, wobei die Transportgeschwindigkeit gegebenenfalls durch die Rotationsgeschwindigkeit der Trommel und/oder die Neigung der Trommelachse veränderbar und einstellbar ist. Die elastische Beschichtung der Trommelinnenwand trägt schließlich dazu bei, daß Anbackungen durch abbindenden Gips vermieden werden können.

Dabei erweist es sich als zweckmäßig, wenn das elastische Material im Abstand zur Trommel angebracht ist.

Elastisches Material, welches im Abstand zur Trommelwand angebracht ist, hat im Vergleich zu direkt auf der Trommelwand angebrachtem elastischen Material eine größere Bewegungsfreiheit und erleichtert daher das Ablösen von eventuellen Anbackungen.

Wie bereits erwähnt, können der Trommel weitere Einrichtungen, insbesondere weitere Trommeln, vor- bzw. nachgeschaltet sein.

Zur Vermeidung übergroßer Bauteile kann es beispielsweise zweckmäßig sein, wenn die erfindungsgemäße Vorrichtung mindestens zwei ineinanderragende zylindrische Trommeln unterschiedlichen Durchmessers aufweist.

Dabei erfolgt der Transport des Schüttgutes immer aus der Trommel kleineren in die Trommel größeren Durchmessers.

Zusätzlich kann es sich bei der zuletzt genannten Vorrichtung als vorteilhaft erweisen, wenn die beiden Trommeln mit unterschiedlichen Drehzahlen drehbar angetrieben sind.

Da das Fassungsvermögen und die Transportgeschwindigkeit unter anderem auch vom Durchmesser der Trommeln abhängen, ist auch diese Weise eine Anpassung der in den Trommeln vorhandenen Schüttgutmengen und der entsprechenden Transportgeschwindigkeit möglich.

Generell wird eine Ausführungsform der Erfindung bevorzugt, bei welcher das elastische Material, welches vorzugsweise aus Gummibahnen besteht, auf der Innenseite der Trommel in Form einer polygonalen Bespannung angebracht ist.

Eine derartige polygonale Bespannung läßt sich konstruktiv mit vertretbarem Aufwand verwirklichen und weist die bereits erwähnten Vorteile des im Abstand zur Trommelwand angebrachten elastischen Materials auf, da die Trommel selbst im Inneren einen kreisförmigen Querschnitt hat, während die polygonale Bespannung, wie der Name schon sagt, im Querschnitt ein Vieleck, beispielsweise ein regelmäßiges Sechs- oder Achteck darstellt und so überwiegend im Abstand zur Trommelwand verläuft.

Um die notwendigen Messungen korrekt durchführen zu können, ist es bei der erfindungsgemäßen Vorrichtung zweckmäßig, wenn eine Haltestange durch die Trommel und im wesentlichen parallel zu deren Rotationsachse verläuft und wenn an der Haltestange Meßeinrichtungen sowie Zuführleitungen für Wasser und Kühlluft angebracht sind.

Da die Trommel an ihren beiden Stirnseiten offen ist, kann eine Haltestange problemlos durch die offenen Stirnseiten und im wesentlichen parallel zur Rotationsachse der Trommel geführt werden und die Meßeinrichtungen sowie die Zuführleitung sind damit unmittelbar "vor Ort", so daß man zum einem korrekte Meßwerte erhält und zum anderen beispielsweise Wasser und/oder Kühluft genau dort, wo sie erforderlich sind, zuführen kann.

Bevorzugt wird dabei eine Ausführungsform, bei welcher mindestens ein Zuführrohr für Wasser und/oder Kühlluft die Haltestange bildet.

Da für Wasser und/oder Kühlluft ohnehin jeweils ein Zuführrohr erforderlich ist, kann dieses sinnvollerweise auch so stabil ausgeführt werden, daß es gleichzeitig als Haltestange für die Meßeinrichtungen und beispielsweise für Einspritzdüsen verwendet werden kann.

In einer weiteren Ausführungsform der erfindungsgemäßen Vorrichtung ist vorgesehen, daß zwischen der elastischen Bespannung und der Trommelinnenwand frei bewegliche Kugeln vorhanden sind.

In vorteilhafter Weise bewirken derartige Kugeln bei der Rotation der Trommel Deformationen der elastischen Bespannung, wodurch sich etwaige Anbackungen an der Innenseite der Bespannung lösen.

Vorzugsweise sind im Einlaufbereich der erfindungsgemäßen Vorrichtung eine Mischmaschine oder ein Mischwerkzeug angeordnet. Im allgemeinen wird durch den Wirkungsbereich der Mischmaschine bzw. der Mischwerkzeuge die bereits erwähnte Zuführ- und Mischungszone definiert. Insbesondere läßt sich mit derartigen Mischmaschinen oder -werkzeugen eine in ihrer Intensität einstellbare mechanische Bewegung des Schüttgutes erreichen.

In analoger Weise ist bei der bevorzugten Ausführungsform der Erfindung vorgesehen, daß im Auslaufbereich der Vorrichtung eine Mischmaschine oder Mischwerkzeuge angeordnet sind.

Der Bereich dieser Mischmaschinen bzw. -werkzeuge definiert die erwähnte Agglomerations- und Austragszone.

Insgesamt dienen sowohl die Mischvorrichtungen im Eingangs-wie auch im Ausgangsbereich der Vorrichtung der Beschleunigung der notwendigerweise ablaufenden Reaktionen durch intensive Durchmischung der Bestandteile des Schüttgutes bzw. Reaktionsgemisches.

Zur Messung der verarbeiteten Schüttgutmengen und der zugeführten Zusätze wie Wasser und dergleichen ist es zweckmäßig, wenn bei der erfindungsgemäßen Vorrichtung die Trommel bzw. die Trommeln und/oder vor- und/oder nachgeschaltete Mischmaschinen bzw. Mischwerkzeuge auf Wiegeeinrichtungen aufgebaut sind.

Aus demselben Grund kann es zweckmäßig sein, wenn vor dem Einlauf der Vorrichtung und nach dem Auslauf der Vorrichtung Einrichtungen zur Messung des Materialstromes vorgesehen sind.

Für bestimmte Anwendungsfälle ist eine Ausführungsform der Erfindung bevorzugt, die mit einer verschließbaren Auslauföffnung ausgerüstet ist.

Dies ist insbesondere dann vorteilhaft, wenn der Weitertransport des agglomerierten und konditionierten Schüttgutes nur chargenweise erfolgen kann. In diesem Fall wird das konditionierte Schüttgut solange in der letzten Stufe der Vorrichtung zurückbehalten, bis der Austrag erfolgen kann.

Bevorzugt wird eine Ausführungsform der erfindungsgemäßen Vorrichtung, bei welcher ihre einzelnen Komponenten in der Stützkonstruktion des darüber befindlichen, zugehörigen Schüttgutsilos angeordnet sind.

Eine derartige Bauweise der erfindungsgemäßen Vorrichtung ist außerordentlich platzsparend und zudem kostengünstig.

Weitere Vorteile, Merkmale und Anwendungsmöglichkeiten der vorliegenden Erfindung werden deutlich anhand der folgenden Beschreibung bevorzugter Ausführungsformen und der dazugehörigen Zeichnungen. Es zeigen:

Figur 1　　die Trommel einer erfindungsgemäßen Vorrichtung in einer Seitenansicht und im Querschnitt,

Figur 2　　eine Ausführungsform, bei welcher zwei Trommeln unterschiedlichen Durchmessers hintereinandergeschaltet sind,

Figur 3　　eine Ausführungsform mit drei Trommeln unterschiedlichen Durchmessers, wobei die mittlere Trommel zusätzlich eine elastische, polygonale Bespannung aufweist,

Figur 4　　eine konische Trommel,

Figur 5　　zwei mit unterschiedlichen Drehzahlen angetriebene Trommeln,

Figur 6　　eine Trommel mit in sie hineinragenden, schematisch angedeuteten Mischwerkzeugen,

Figur 7　　den Querschnitt einer Trommel mit einer elastischen, in konstantem Abstand angebrachten Bespannung,

Figur 8　　eine Trommel mit einer elastischen, polygonalen Bespannung,

Figur 9　　eine auf Kraftaufnehmern gelagerte Gerätekombination,

Figur 10　　einen Längsschnitt durch eine Trommel mit einem Wasserrohr als Haltestange für Meß- und Zuführeinrichtungen,

Figur 11　　eine komplette Vorrichtung zur Aschekonditionierung

Figur 12    eine Seitenansicht der Vorrichtung aus Figur 11

Figur 13    die Anordnung von zwei erfindungsgemäßen Vorrichtungen unter zwei Schüttgutsilos,

Figur 14    eine Ansicht auf Figur 13 von oben,

Figur 15    eine schematische Darstellung der Vorrichtung mit Meßstellen.

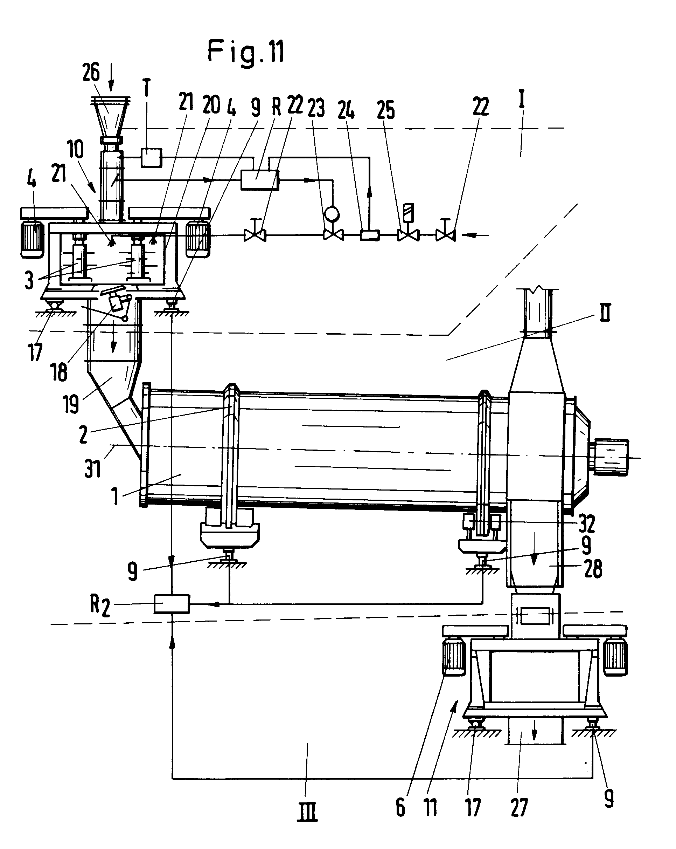

Anhand der Figur 11 soll zunächst das bevorzugte Verfahren beschrieben werden.

Bei dem Verfahren sind drei unterschiedliche Stufen bzw. Behandlungszonen I, II und III zu unterscheiden. In Figur 11 sind diese Behandlungszonen schematisch durch gestrichelte Linien angedeutet. In diesen drei Zonen wird das Schüttgut jeweils unterschiedlich mechanisch behandelt.

Zunächst gelangt das Schüttgut in die Behandlungszone I, wo Meßeinrichtungen T die physikalische (Temperatur, Feuchtigkeit) und chemische Beschaffenheit des Schüttgutes messen. Ein Rechner R steuert dabei die Zufuhr von Wasser, Naßasche und/oder weiteren Zusatzstoffen, welche noch in der Behandlungszone I mit dem Schüttgut intensiv vermischt und zur Vorreaktion gebracht werden.

Ohne das Verfahren bzw. die Vorrichtung beschränken zu wollen, soll im Folgenden die Filterasche eines Kraftwerkes als Schüttgut betrachtet werden.

Nach dem Vormischen und der Vorreaktion gelangt die Filterasche in die Behandlungszone II, welche im wesentlichen aus der Trommel 1 besteht. In der Hauptreaktionszone II werden im allgemeinen keine Misch- oder Knetwerkzeuge eingesetzt, und die mechanische Behandlung ist entsprechend weniger intensiv. In diesem Bereich findet unter Wärmeentwicklung zum überwiegenden Teil das Löschen des CaO-Anteils statt, wobei mit Hilfe von Temperatur- und Feuchtigkeitsmeßgeräten die Geschwindigkeit des Löschvorganges über einen Rechner gesteuert wird, welcher je nach Bedarf die Zufuhr von Kühlluft, Kühlwasser, Löschwasser und auch die Rotationsgeschwindigkeit der Trommel 1 regelt. Zusätzlich kann als weiterer Regelparameter auch die Neigung der Trommelachse 31 mit Hilfe des Rechners R so verändert werden, daß die Verweildauer der Filterasche in der Trommel 1 mit der Dauer der ablaufenden Reaktion übereinstimmt. Die Neigung der Trommelachse 31 ist dabei jedoch auch von der Drehgeschwindigkeit der Trommel 1 und dem Schüttverhalten der Filterasche abhängig.

Die kontrollierte Zugabe von Kühlluft, Wasser oder anderen Zusatzstoffen ermöglicht die optimale Steuerung der Hauptreaktion, welche, wie bereits erwähnt, im wesentlichen, jedoch nicht ausschließlich im Löschen des Kalkanteiles besteht. Neben dem gebrannten Kalk (CaO) liegt im allgemeinen auch Gips ($CaSO_4$) in der Filterasche vor. Der Anteil dieser beiden Komponenten ist jedoch in Abhängigkeit von der Kohlezusammensetzung stark schwankend. Die Steuerung des Prozesses muß daher so erfolgen, daß mit Sicherheit das gesamte CaO und $CaSO_4$ hydraulisiert wird. Daher ist die genaue Steuerung der Hauptreaktion und vor allem ihre Koordinierung mit der Transportgeschwindigkeit in der Trommel 1 von großer Bedeutung für ein optimiertes Konditionierungsverfahren.

In der Behandlungszone III findet schließlich die Agglomeration und Verdichtung der so behandelten Filterasche statt, so daß schließlich ein in Deponien lagerfähiges, gegebenenfalls auch weiter zu verarbeitendes Produkt entsteht. Auch in der dritten Behandlungsstufe finden weitere Kontrollmessungen statt, durch die sowohl an Ort und Stelle, d.h. in der Behandlungszone III, als auch in den vorhergehenden Behandlungsstufen I und II entsprechende Korrekturdosierungen vorgenommen werden können.

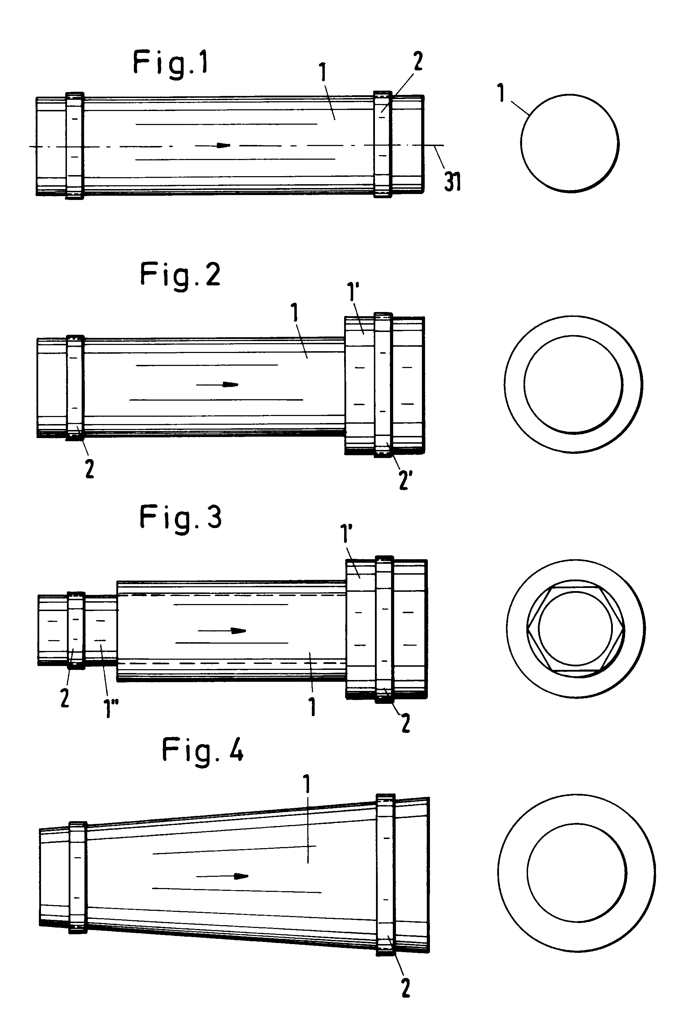

Die Figuren 1 bis 5 zeigen verschiedene Ausführungsformen von Trommeln für eine Vorrichtung gemäß der Erfindung.

Figur 1 zeigt eine einfache zylindrische Trommel 1 mit einem Antriebsrad 2, welches entweder als Zahnrad oder als Reibrad ausgeführt ist und über welches mit Hilfe eines entsprechenden Antriebes die Trommel 1 in Rotation versetzt wird. Die Trommel 1 kann auch mehrere Antriebsräder 2 aufweisen. Wie das ebenfalls in Figur 1 dargestellte Teilbild zeigt, hat die Trommel einen durchgehend gleichen, kreisförmigen Querschnitt. Bei der in Figur 2 dargestellten Ausführungsform sind zwei Trommeln 1, 1′ um eine gemeinsamen Achse rotierend derart angeordnet, daß sie stückweise übereinander greifen. Bei einer derartigen Ausführungsform ist die Richtung des Filteraschestroms festgelegt und muß stets von der Trommel 1, mit dem kleineren Durchmesser in die Trommel 1′ mit dem größeren Durchmesser erfolgen, da andernfalls der Transport von Asche aus der größeren Trommel 1′ in die kleinere Trommel 1 nur unter erhöhtem Aufwand möglich wäre. Die beiden Trommeln 1, 1′ sind im Überlappungsbereich fest miteinander verbunden.

Figur 3 zeigt eine ähnliche Ausführungsform wie Figur 2, jedoch sind hier drei Trommeln 1, 1′, 1″ hintereinander geschaltet. Bei einer derartigen Ausführungsform könnte beispielsweise das Innere der Trommel 1′ die Zuführ- und Mischungszone I, die Trommel 1 die Hauptreaktionszone II und die Trommel 1′ die Agglomerations- und Austragszone III bilden. Zusätzlich ist bei der in Figur 3 dargestellten Ausführungsform die Verwendung einer polygonalen Bespannung 7 im Innern der Trommel 1 vorgesehen, deren kleinster innerer Durchmesser jedoch auf jeden Fall größer sein muß, als der Innendurchmesser der Trommel 1″. Dies ist in dem Teilbild der Figur 3, welches die Trommeln aus axialer Sicht darstellt, deutlich zu erkennen.

In Figur 4 schließlich ist eine Trommel 1 mit konischer Form zu erkennen. Rotiert eine derartige Trommel um eine horizontale Trommelachse 31 und wird sie von ihrer engeren Öffnung her mit Filterasche beschickt, so wird aufgrund der konischen Form die Asche bei der Rotation der Trommel immer in Richtung auf das weitere Ende hin transportiert. Im Falle zylindrischer Trommeln 1 erreicht man dies durch eine entsprechende Neigung der Trommelachse 31.

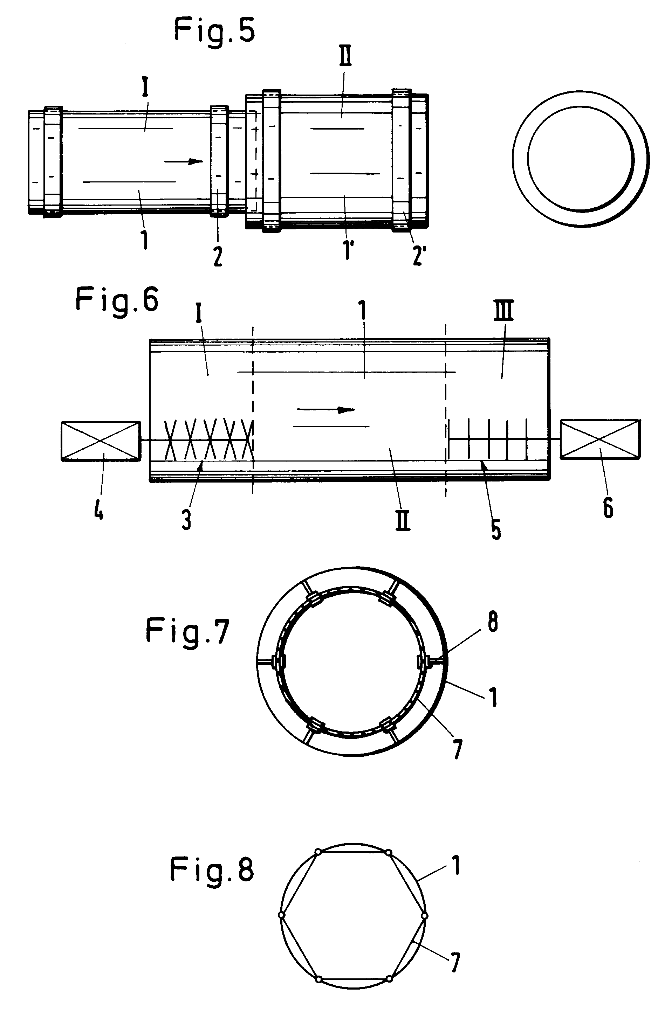

Die Figur 5 zeigt wiederum eine Ausführungsform mit zwei in einanderragenden Trommeln 1, 1′ unterschiedlichen Durchmessers, jedoch sind diese beiden Trommeln 1, 1′ im Gegensatz zu den Trommeln der Figuren 2 und 3 in ihrem übereinandergreifenden Bereich nicht miteinander verbunden, sondern frei gegeneinander drehbar gelagert. Dies ermöglicht unterschiedliche Drehgeschwindigkeiten für beide Trommeln, welche für eine Optimierung des Verfahrensablaufes sehr nützlich sind, da die Transportgeschwindigkeit der Filterasche in den Trommeln 1, 1′ nicht nur von deren Rotationsgeschwindigkeit und der Neigung der Rotationsachse 31 sondern auch von ihrem Durchmesser abhängt. Außerdem können die beiden Trommelachsen 31 eine unterschiedliche Neigung aufweisen.

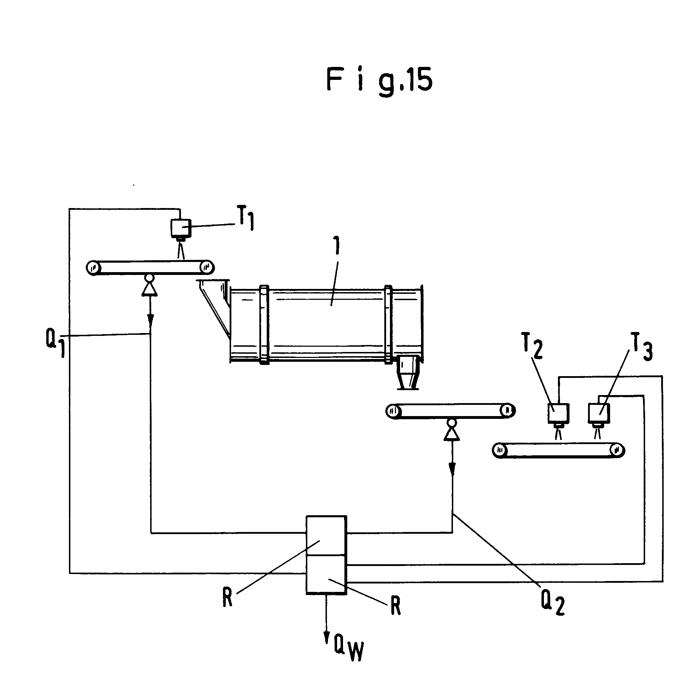

Figur 6 zeigt eine Trommel 1 in deren Einlaufbereich Mischwerkzeuge 3 und in deren Auslaufbereich Agglomerationswerkzeuge 5 angeordnet sind. Diese Werkzeuge werden durch entsprechende Antriebe 4 bzw. 6 in Rotation versetzt und unterstützen so den Misch- bzw. den Agglomerationsvorgang. Bei dieser Ausführungsform finden also in ein und derselben Trommel 1 unterschiedliche mechanische Behandlungen statt, und in Analogie zu dem Verfahrensschema nach Figur 15 kann man die Trommel 1 in drei unterschiedliche Behandlungszonen I, II und III aufteilen, die durch gestrichelte Linien angedeutet sind und in denen die Filterasche jeweils eine unterschiedliche mechanische Behandlung erfährt.

Die Figuren 7 und 8 stellen je eine Trommelquerschnitt dar, wobei die Trommelinnenseite mit einer elastischen Bespannung 7 versehen ist. Dabei wird im Beispiel der Figur 7 die Bespannung 7 durch Abstandhalter 8 in einem im wesentlichen festen Abstand zur Innenseite der Trommel 1 gehalten. Die elastische Bespannung kann beispielsweise aus Gummibahnen bestehen, welche zur Erhöhung ihrer Formstabilität im Inneren beispielsweise ein dünnes Stahlgeflecht aufweisen, so daß die Bespannung 7 trotz ihrer Elastizität den in Figur 7 dargestellten kreisrunden Querschnitt hat.

In der mehr schematischen Figur 8 erkennt man eine polygonale Bespannung 7, wobei der Polygonzug dadurch entsteht, daß das Bespannungsmaterial, also z.B. Gummi, unter Spannung an der Innenwand der Trommel 1 befestigt wird. Als zweckmäßig erweisen sich dabei regelmäßige Polygonzüge mit sechs bis maximal zwölf Ecken.

Der Freiraum auf der Rückseite der elastischen Bespannung 7 läßt eine Bewegung der Bespannung 7 in radialer Richtung nach außen und auch nach innen zu. Die Innenwand einer derartigen Trommel 1 ist also weitgehend elastisch deformierbar. Die Deformation wird beispielsweise erzeugt durch das Gewicht der jeweils auf der bzw. den unteren Flächen der Bespannung 7 lastenden Filterasche. Beim Drehen der Trommel 1 werden diese Flächen, sobald sie nach oben gelangen, von diesem Gewicht entlastet, so daß sie wieder ihre ursprüngliche Form annehmen. Eventuell leicht anbackendes Material platzt dabei von den elastischen Flächen ab. Auf diese Weise werden Anbackungen weitgehend vermieden. Man kann diesen durch die elastische Deformation der Bespannung 7 hervorgerufenen Effekt noch dadurch verstärken, daß man den Hohlraum zwischen der Trommelinnenwand und der Bespannung 7 beispielsweise mit schweren Kugeln füllt, welche bei der Drehung der Trommel 1 hin- und herrollen und je nach der Position der Trommel 1 die Bespannung 7 mal be- und mal entlasten. Hierdurch werden die Deformationen der elastischen Bespannung 7 noch ausgeprägter, und Anbackungen werden noch sicherer vermieden.

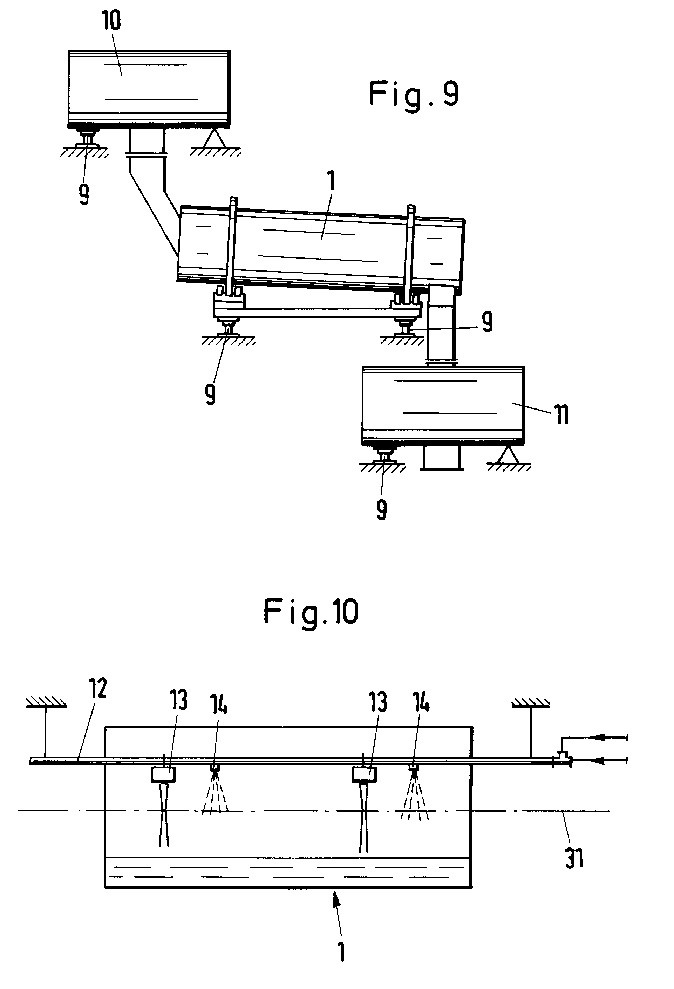

Figur 9 zeigt im Gegensatz zur Figur 6 eine Ausführungsform der Erfindung, bei welcher keinerlei Misch- oder Agglomerationswerkzeuge im Innern der Trommel 1 angeordnet sind, sonden bei welcher der Trommel 1 ein Vormischer 10 vorgeschaltet und ein Agglomerator 11 nachgeschaltet sind. Die Aufteilung der Vorrichtung im Vormischer 10, Trommel 1 und Agglomerator 11 entspricht demnach auch in dieser Reihenfolge den Behandlungszonen I, II und III. Zusätzlich sind die einzelnen Elemente der in Figur 9 dargestellten Vorrichtung auf Kraftaufnehmer 9 montiert, mit Hilfe derer das Gewicht bzw. die Menge des verarbeiteten Materials bestimmt werden kann.

Figur 10 zeigt einen Längsschnitt durch eine Trommel 1, durch welche parallel zur Rotationsachse 31 als Haltestange für Meßgeräte 13 und für Sprühdüsen 14 ein Wasserrohr 12 angeordnet ist, welches zusätzlich eine nicht dargestellte Kühlluftleitung trägt.

Da die Trommel 1 stirnseitig jeweils offen ist, kann das Wasserrohr 12 außerhalb der Trommel 1 beispielsweise an festen Rahmenelementen befestigt werden.

Figur 11 zeigt eine Ausführungsform der Vorrichtung in Einzelheiten. Die Filterasche gelangt über den Einlauf 26 in den Vormischer 10 und wird dort von Werkzeugen 3, welche von einem Mischwerkzeugsantrieb 4 in Rotation versetzt werden, mit Prozeßwasser, welches aus den Sprühdüsen 21 austritt, vorgemischt. Über die Meßeinrichtung T wurden zuvor Temperatur, Feuchtigkeit und chemische Beschaffenheit des Schüttgutes gemessen und die Meßresultate an einen Rechner R weitergeleitet. Über einen Schüttstrommesser 29 und auch mit Hilfe des Kraftaufnehmers 9 am Fuß des Vormischers 10 wird die in den Mischer einlaufende Aschenmenge bestimmt. Während das Meßergebnis vom Schüttstrommesser 29 an den Rechner R geleitet wird, gelangt das Ergebnis vom Kraftaufnehmer 9 in den Rechner $R_2$, welcher jedoch auch mit dem Rechner R gekoppelt sein kann oder sogar mit diesem identisch ist.

Der Rechner R steuert das Motordurchgangsventil 23 und das Magnetventil 25 so, daß die zugeführte Wassermenge dem aus den Meßwerten berechneten Bedarf entspricht. Ein induktiver Durchflußmesser 24 übermittelt dem Rechner R dabei die jeweils zugeführte Wassermenge. Zusätzlich sind noch manuell zu betätigende Ventile 22 in der Wasserleitung vorgesehen.

Der Vormischer 10 ruht einseitig auf einem Walzlager 17, während auf der gegenüberliegenden Seite der Kraftaufnehmer 9 als Lager dient. Da auch die Mischtrommel 20 des Vormischers 10 rotiert, kann auch mit Hilfe des nur einseitig angebrachten Kraftaufnehmers 9 die Masse des in der Mischtrommel 20 enthaltenen Materials bestimmt werden. Nach der Vormischung wird die Asche über den Verschlußdeckel 18 in den Fülltrichter 19 entleert und gelangt so in die Trommel 1. Die Trommel 1 ist beidseitig auf Kraftaufnehmern 9 gelagert, deren Meßwerte dem Rechner $R_2$ übermittelt werden. Auf diese Weise läßt sich problemlos die Masse des in der Trommel vorhandenen Materials bestimmen. Zusätzlich läßt sich über eine Hubeinrichtung 32 die Neigung der Trommelachse 31 gegenüber der Horizontalen einstellen. Die Trommel wird über mindestens ein Antriebsrad 2 angetrieben und befördert die vorgemischte Asche während des Ablaufes der Hauptreaktion langsam in Richtung auf den Trommelauslauf 28. Die Trommel 1 kann mit der einen ihrer offenen Stirnseiten unmittelbar über dem Trommelauslauf 28 enden, sie kann jedoch auch an diesem stirnseitigen Ende eine Abdeckung und stattdessen in der Trommelwand angebrachte Öffnungen aufweisen, durch welche der Trommelinhalt in den Trommelauslauf 28 fällt.

Von dort gelangt die Asche, deren Hauptreaktion in der Trommel abgeschlossen wurde, in den Agglomerator 11, welcher nicht dargestellte Agglomerationswerkzeuge 5 enthält, deren Antrieb 6 außerhalb des Agglomerators 11 sichtbar ist.

Der Agglomerator 11 ist ebenfalls einseitig auf mindestens einem Walzlager 17 und auf der anderen Seite auf einem Kraftaufnehmer 9 gelagert. in ähnlicher Weise wie beim Vormischer 10 wird auch beim Agglomerator 11 die Menge des in ihm enthaltenen Materials mit Hilfe des Rechners $R_2$ bestimmt. Der Rechner $R_2$ steuert in Abhängigkeit von den gemessenen Mengen die Rotationsgeschwindigkeit von Vormischer 10, Trommel 1 und Agglomerator 11, sowie den Öffnungsrhythmus des Verschlußdeckels 18 und die Hubeinrichtung 32 für die Neigungsverstellung der Trommelachse 31. Die fertig konditionierte Asche verläßt dann den Agglomerator über den Auslauf 27.

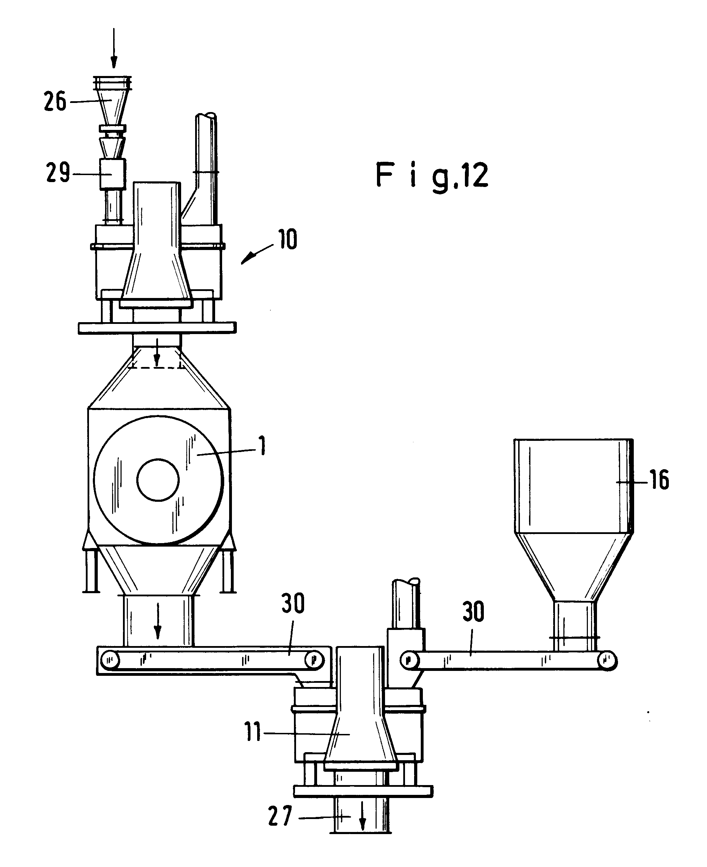

In Figur 12 ist die in Figur 11 dargestellte Anlage in der Ansicht auf Figur 11 von rechts zu sehen. Dabei erkennt man, daß dem Agglomerator 11 über Transportbänder 30 sowohl die Asche aus der Trommel 1 als auch Naßasche aus einem Naßaschesilo 16 zugeführt werden kann.

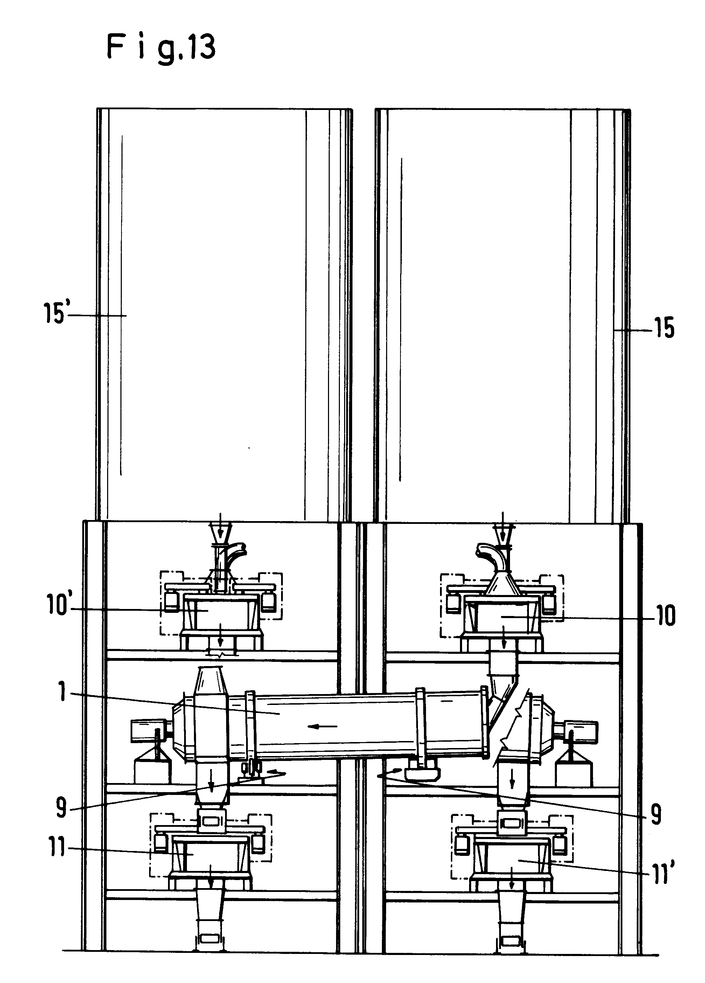

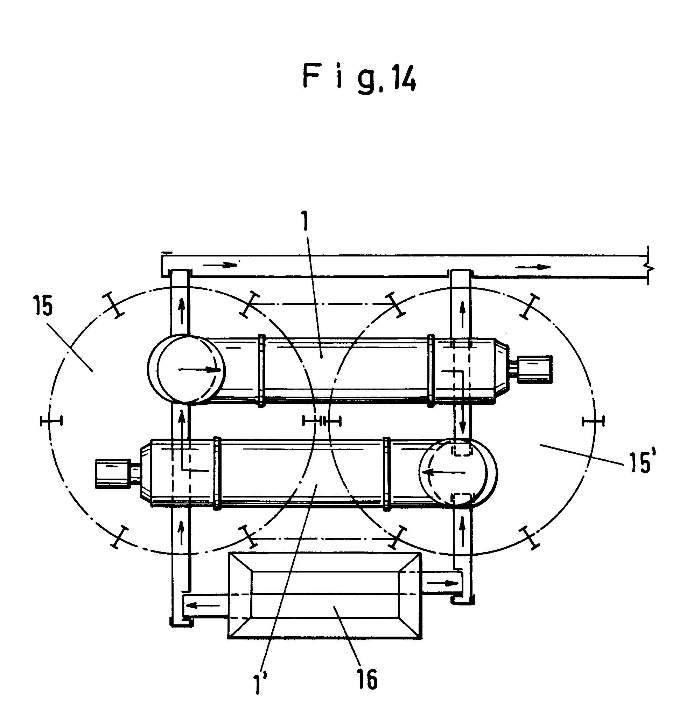

Die Figuren 13 und 14 stellen den Aufbau von zwei der eben geschilderten Vorrichtungen in der Stützkonstruktion von zwei Schüttgutsilos 15, 15' dar. Analog zu Figur 11 erkennt man unmittelbar unter dem Schüttgutsilo 15 einen Vormischer 10, dessen Inhalt weiter in eine Trommel 1 geleitet wird und von dort in den Agglomerator 11 gelangt. Dahinter erkennt man dei nur teilweise dargestellte Vorrichtung, bestehend aus dem Vormischer 10', welcher aus dem Silo 15' beschickt wird, die Trommel 1', welche nur teilweise dargestellt ist und den darunter angeordneten Agglomerator 11'.

Ein derartigen Aufbau innerhalb der Stützkonstruktion entsprechender Schüttgutsilos 15, 15' ist außerordentlich platzsparend und verringert zudem die Baukosten einer entsprechenden Anlage ganz erheblich.

Figur 14 gibt eine Ansicht auf Figur 13 von oben wieder, in welcher die platzsparende Anordnung deutlich zu erkennen ist. Beide Agglomeratoren 11, 11' werden in diesem Fall von einem gemeinsamen Naßaschesilo 16 bei Bedarf beschickt.

Wie bereits geschildert, wird der gesamte Ablauf mit Hilfe von Meßeinrichtungen kontrolliert und über einen bzw. mehrere Rechner gesteuert und optimiert. Dies wird in Figur 15 schematisch dargestellt. Dabei sind $T_1$, $T_2$, $T_3$ Meßstellen für Feuchtigkeit, Temperatur und/oder chemische Beschaffenheit, $Q_1$, $Q_2$ sind Meßsignale, die von Wiegeeinrichtungen oder Durchflußmessern herrühren und mit R sind Rechner bezeichnet, welche den Verfahrensablauf steuern. $Q_w$ sind entsprechende Steuersignale.

**Patentansprüche**

1. Verfahren zur Behandlung von Kraftwerksreststoffen in Form von Schüttgut, insbesondere der Filterasche von Kraftwerken, durch Löschen des Kalkanteils unter überstöchiometrischer Feuchtigkeitszugabe, mit kontinuierlicher Zuführ- und Austragsmöglichkeit des zu verarbeitenden bzw. verarbeiteten Materials, wobei das zugeführte Schüttgut nacheinander verschiedene, im wesentlichen räumlich getrennte Behandlungszonen durchläuft und in jeder Behandlungszone unterschiedlich behandelt, zur Reaktion gebracht und kontrolliert entlang einer Reaktionsstrecke transportiert wird, dadurch gekennzeichnet, daß das Schüttgut konditioniert wird, indem es während des gesamten Durchlaufes mit in jeder Behandlungszone unabhängig einstellbarer Intensität mechanisch bewegt wird, in einer ersten Behandlungszone (I) eine intensive Durchmischung des Schüttgutes mit Wasser erfolgt, die so erzeugte Mischung in eine zweite Behandlungszone transportiert wird, in welcher im wesentlichen die Reaktion zwischen den hydraulischen Bestandteilen und dem zugegebenen Wasser abläuft, in einer dritten Behandlungszone im Anschluß an die Reaktion eine Agglomeration stattfindet, indem die Wasserzugabe so erfolgt, daß das Material feucht gehalten wird, wobei entlang der Reaktionsstrecke hinter der ersten Behandlungszone die wahlweise Zugabe einer Korrekturwassermenge vorgesehen ist.

2. Verfahren nach Anspruch 1, dadurch gekennzeichnet, daß zumindest am Anfang und am Ende der Reaktionsstrecke Feuchtigkeit und/oder Temperatur und/oder die chemische Beschaffenheit des Reaktionsgemisches gemessen werden und daß in Abhängigkeit von den erhaltenen Meßwerten mindestens eine Korrekturdosierung entlang der Reaktionsstrecke an beliebiger Stelle vorgesehen ist, wobei die Korrektur so frühzeitig erfolgt, daß sie bis zum Verlassen des Materials aus der Anlage wirksam wird.

3. Verfahren nach einem der Ansprüche 1 oder 2, dadurch gekennzeichnet, daß die einzelnen Behandlungszonen im wesentlichen aus einer Zuführ- und Mischungszone (I), einer Hauptreaktionszone (II) und einer Agglomerations- und Austragszone (III) bestehen.

4. Verfahren nach einem der Ansprüche 1 bis 3, dadurch gekennzeichnet, daß zur Erhöhung des Feuchtigkeitsgehaltes Naßasche oder wasserhaltige Rückstände aus der Rauchgasentschwefelung zugeführt werden.

5. Verfahren nach einem der Ansprüche 1 bis 3, dadurch gekennzeichnet, daß zur Erhöhung des Feuchtigkeitsgehaltes frisches oder mit Zusätzen versehenes Prozeßwasser zugeführt wird.

6. Verfahren nach Anspruch 5, dadurch gekennzeichnet, daß das Prozeßwasser durch Abwärme der Hauptreaktionszone (II) oder des vorgeschalteten Kraftwerkes vorgeheizt wird.

7. Verfahren nach einem der Ansprüche 2 bis 6, dadurch gekennzeichnet, daß die physikalischen und/oder chemischen Eigenschaften des Reaktionsgemisches berührungslos gemessen werden.

8. Verfahren nach einem oder mehreren der Ansprüche 1 bis 7, dadurch gekennzeichnet, daß vor dem Austrag größere Schüttgutstücke zerkleinert werden.

9. Verfahren nach einem oder mehreren der Ansprüche 1 bis 8, dadurch gekennzeichnet, daß die Zufuhr von Schüttgut in Abhängigkeit von der Feuchtigkeit und/oder Temperatur des Materials am Ende der Reaktionsstrecke gesteuert wird.

10. Verfahren nach einem oder mehreren der Ansprüche 1 bis 9, dadurch gekennzeichnet, daß die Zufuhr von Schüttgut in Abhängigkeit vom Füllgrad der Hauptreaktionszone (II) gesteuert wird.

11. Verfahren nach einem oder mehreren der Ansprüche 1 bis 10, dadurch gekennzeichnet, daß die Transportgeschwindigkeit in Abhängigkeit von Temperatur und/oder Feuchtigkeit und/oder chemischer Beschaffenheit am Ausgang der Hauptreaktionszone (II) oder der Agglomerationszone (III) gesteuert wird.

12. Vorrichtung zur Durchführung des Verfahrens nach einem der Ansprüche 1 bis 11 zur Konditionierung von Kraftwerksreststoffen in Form von Schüttgut, insbesondere der Filterasche von Kraftwerken, durch Löschen des Kalkanteiles unter Feuchtigkeitszugabe und durch weiteres Anfeuchten des Schüttgutes, bestehend aus einem rotierenden Reaktionsbehälter, Zuführ- und Austragseinrichtungen für das Schüttgut und einer Einrichtung für die Zufuhr von Feuchtigkeit, dadurch gekennzeichnet, daß der Reaktionsbehälter aus mindestens einer an beiden Stirnseiten im wesentlichen offenen zylindrischen Trommel, welche um eine gegen die Horizontale leicht geneigte Achse rotiert, und/oder aus mindestens einer konischen, kegelstumpfförmigen Trommel, welche um eine horizontale oder gegen die Horizontale leicht geneigte Achse rotiert, besteht, daß das Verhältnis der Länge zum größten Innendurchmesser der Trommel größer als 2:1, vorzugsweise größer als 4:1 ist, und daß die Trommelinnenwand zumindest über einen Teil der Trommellänge mit elastischem Material beschichtet ist, und daß vor der Eintrittsöffnung der Trommel oder im Eingangsbereich der Trommel Mischeinrichtungen und eine Wasserzufuhr für das Mischen des Schüttgutes mit Wasser vorgesehen sind.

13. Vorrichtung nach Anspruch 12, dadurch gekennzeichnet, daß das elastische Material im Abstand zur Trommelwand angebracht ist.

14. Vorrichtung nach Anspruch 12 oder 13, dadurch gekennzeichnet, daß sie mindestens zwei ineinanderragende zylindrische Trommeln unterschiedlichen Durchmessers aufweist.

15. Vorrichtung nach Anspruch 14, dadurch gekennzeichnet, daß die beiden Trommeln mit unterschiedlichen Drehzahlen drehbar angetrieben sind.

16. Vorrichtung nach einem der Ansprüche 12 bis 15, dadurch gekennzeichnet, daß das elastische Material, welches vorzugsweise aus Gummibahnen besteht, auf der Innenseite der Trommel in Form einer polygonalen Bespannung angebracht ist.

17. Vorrichtung nach einem der Ansprüche 12 bis 16, dadurch gekennzeichnet, daß eine Haltestange durch die Trommel und im wesentlichen parallel zu deren Rotationsachse verläuft und daß an der Haltestange Meßeinrichtungen sowie Zuführleitungen für Wasser und Kühlluft angebracht sind.

18. Vorrichtung nach Anspruch 17, dadurch gekennzeichnet, daß mindestens ein Zuführrohr für Wasser und/oder Kühlluft die Haltestange bildet.

19. Vorrichtung nach einem der Ansprüche 12 bis 18, dadurch gekennzeichnet, daß zwischen der elastischen Bespannung und der Trommelinnenwand freibewegliche Kugeln vorhanden sind.

20. Vorrichtung nach einem der Ansprüche 12 bis 19, dadurch gekennzeichnet, daß im Einlaufbereich der Vorrichtung eine Mischmaschine oder ein Mischwerkzeug angeordnet sind.

21. Vorrichtung nach einem der Ansprüche 12 bis 20, dadurch gekennzeichnet, daß im Auslaufbereich der Vorrichtung eine Mischmaschine oder Mischwerkzeuge angeordnet sind.

22. Vorrichtung nach einem der Ansprüche 12 bis 21, dadurch gekennzeichnet, daß die Trommel bzw. die Trommeln und/oder vor- und/oder nachgeschaltete Mischer auf Wiegeeinrichtungen aufgebaut sind.

23. Vorrichtung nach einem der Ansprüche 12 bis 22, dadurch gekennzeichnet, daß vor dem Einlauf der Vorrichtung und nach dem Auslauf der Vorrichtung Einrichtungen zur Messung des Materialstromes vorgesehen sind.

24. Vorrichtung nach einem der Ansprüche 13 bis 23, dadurch gekennzeichnet, daß sie mit einer verschließbaren Auslauföffnung ausgerüstet ist.

25. Vorrichtung nach einem der Ansprüche 13 bis 24, dadurch gekennzeichnet, daß ihre einzelnen Komponenten in der Stützkonstruktion des darüber befindlichen Schüttgutsilos angeordnet sind.

**Claims**

1. A process for the treatment of power station residues in the form of loose material, in particular the filter ash from power stations, by slaking the lime component with over-stoichiometric addition of moisture, with the possibility of a continuous feed and discharge of the material to be processed or the processed material respectively, wherein the fed loose material successively passes through different, substantially spatially separated treatment zones and in each treatment zone is treated differently and caused to react and transported in a controlled fashion along a reaction section, characterised in that the loose material is processed by being mechanically moved throughout its entire passage movement with a degree of intensity which is independently adjustable in each treatment zone, in a first treatment zone (I) the loose material is intensively mixed with water, the mixture produced in that way is transported into a second treatment zone in which essentially the reaction takes place between the hydraulic constituents and the added water, in a third treatment zone subsequent to the reaction agglomeration takes place by the addition of water being such that the material is kept moist, wherein the selective addition of a correction amount of water is provided along the reaction section downstream of the first treatment zone.

2. A process according to claim 1 characterised in that at least at the beginning and the end of the reaction section moisture and/or temperature and/or the chemical nature of the reaction mixture are measured and that at least one correction metering operation is provided at any location along the reaction section in dependence on the measurement values obtained, the correction occurring so early that it becomes effective by the time that the material leaves the installation.

3. A process according to one of claims 1 and 2 characterised in that the individual treatment zones essentially comprise a feed and mixing zone (I), a main reaction zone (II) and an agglomeration and discharge zone (III).

4. A process according to one of claims 1 to 3 characterised in that wet ash or water-bearing residues from the flue gas desulphurisation operation are added for increasing the moisture content.

5. A process according to one of claims 1 to 3 characterised in that fresh process water or process water provided with additives is added to increase the moisture content.

6. A process according to claim 5 characterised in that the process water is preheated by waste heat from the main reaction zone (II) or the upstream-disposed power station.

7. A process according to one of claims 2 to 6 characterised in that the physical and/or chemical properties of the reaction mixture are measured in a contact-less manner.

8. A process according to one or more of claims 1 to 7 characterised in that larger pieces of loose material are broken up before discharge.

9. A process according to one or more of claims 1 to 8 characterised in that the feed of loose material is controlled in dependence on the moisture content and/or temperature of the material at the end of the reaction section.

10. A process according to one or more of claims 1 to 9 characterised in that the feed of loose material is controlled in dependence on the degree of filling of the main reaction zone (II).

11. A process according to one or more of claims 1 to 10 characterised in that the transportation speed is controlled in dependence on temperature and/or moisture content and/or chemical nature at the outlet of the main reaction zone (II) or the agglomeration zone (III).

12. Apparatus for carrying out the process according to one of claims 1 to 11 for the processing of power station residues in the form of loose material, in particular the filter ash from power stations, by slaking the lime component with the addition of moisture and by further moistening of the loose material, comprising a rotary reaction container, feed and discharge means for the loose material and a means for the feed of moisture, characterised in that the reaction container comprises at least one cylindrical drum which is substantially open at both ends and which rotates about an axis which is slightly inclined relative to the horizontal, and/or at least one conical, frustoconical drum which rotates about an axis which is horizontal or slightly inclined relative to the horizontal, that the ratio of the length to the largest inside diameter of the drum is greater than 2:1, preferably greater than 4:1, and that the inside wall of the drum is coated with elastic material at least over a part of the drum length, and that disposed in front of the intake opening of the drum or in the entry region of the drum are mixing devices and a water feed for mixing of the loose material with water.

13. Apparatus according to claim 12 characterised in that the elastic material is disposed at a spacing relative to the wall of the drum.

14. Apparatus according to claim 12 or claim 13 characterised in that it has at least two interengaging cylindrical drums of different diameters.

15. Apparatus according to claim 14 characterised in that the two drums are driven in rotation at different speeds.

16. Apparatus according to one of claims 12 to 15 characterised in that the elastic material which preferably comprises rubber strips is disposed on the inside of the drum in the form of a polygonal covering.

17. Apparatus according to one of claims 12 to 16 characterised in that a holding bar extends through the drum and substantially parallel to the axis of rotation thereof and that measuring devices and feed conduits for water and cooling air are carried on the holding bar.

18. Apparatus according to claim 17 characterised in that at least one feed pipe for water and/or cooling air forms the holding bar.

19. Apparatus according to one of claims 12 to 18 characterised in that freely movable balls are provided between the elastic covering and the inside wall of the drum.

20. Apparatus according to one of claims 12 to 19 characterised in that a mixing machine or a mixing tool are arranged in the intake region of the apparatus.

21. Apparatus according to one of claims 12 to 20 characterised in that a mixing machine or mixing tools are arranged in the exit region of the apparatus.

22. Apparatus according to one of claims 12 to 21 characterised in that the drum or drums and/or mixers disposed upstream and/or downstream are disposed on weighing devices.

23. Apparatus according to one of claims 12 to 22 characterised in that devices for measuring the flow of material are provided upstream of the intake of the apparatus and downstream of the outlet of the apparatus.

24. Apparatus according to one of claims 13 to 23 characterised in that it is provided with a closable outlet opening.

25. Apparatus according to one of claims 13 to 24 characterised in that its individual components are arranged in the support structure of the loose material silo disposed thereabove.

**Revendications**

1. Procédé destiné au traitement de résidus de centrales électriques se présentant sous la forme de matières en vrac, en particulier des cendres de filtration de centrales électriques, par extinction de la fraction chaux en présence d'une addition d'humidité au-delà des proportions stoechiométriques, avec possibilité d'amenée et d'évacuation continues du matériau à traiter ou déjà traité, la matière en vrac amenée traversant successivement plusieurs zones de traitement, pour l'essentiel séparées dans l'espace, et, dans chaque zone de traitement, étant soumise à des traitements différents, mise en réaction et transportée d'une manière contrôlée le long d'une section de réaction, caractérisé en ce que la matière en vrac est conditionnée par le fait que, pendant la totalité de son passage, elle subit un mouvement mécanique d'intensité réglable indépendamment dans chaque zone de traitement ; dans une première zone de traitement (I) a lieu un mélange intense de la matière en vrac et de l'eau ; le mélange ainsi obtenu est transporté dans une deuxième zone de traitement, dans laquelle se déroule pour l'essentiel la réaction entre les constituants hydrauliques et l'eau ajoutée ; dans une troisième zone de traitement, après la réaction, a lieu une agglomération pendant laquelle l'addition d'eau est réalisée de façon à maintenir le matériau humide, l'addition éventuelle d'une quantité d'eau servant à la correction étant prévue le long de la section de réaction, en arrière de la première zone de traitement.

2. Procédé selon la revendication 1, caractérisé en ce que, au moins au début et à la fin de la section de réaction, on mesure l'humidité et/ou la température et/ou les caractéristiques chimiques du mélange réactionnel, et que, en fonction des valeurs de mesure obtenues, on prévoit au moins un dosage de correction le long de la section de réaction, en un point quelconque, la correction étant effectuée suffisamment tôt pour qu'elle soit efficace jusqu'à ce que le matériau sorte de l'installation.

3. Procédé selon l'une des revendications 1 ou 2, caractérisé en ce que les différentes zones de traitement sont pour l'essentiel constituées d'une zone d'amenée et de mélange (I), d'une zone de réaction principale (II) et d'une zone d'agglomération et d'évacuation (III).

4. Procédé selon l'une des revendications 1 à 3, caractérisé en ce que, pour augmenter la teneur en humidité, on amène des cendres humides ou des résidus contenant de l'eau et provenant de la désulfuration des fumées.

5. Procédé selon l'une des revendications 1 à 3, caractérisé en ce que, pour augmenter la teneur en humidité, on amène de l'eau de procédé, fraîche ou additivée.

6. Procédé selon la revendication 5, caractérisé en ce que l'eau de procédé est préchauffée par les chaleurs résiduelles de la zone de réaction principale (II) ou de la centrale électrique montée en amont.

7. Procédé selon l'une des revendications 2 à 6, caractérisé en ce que les propriétés physiques et/ou chimiques du mélange réactionnel sont mesurées sans contact.

**8.** Procédé selon l'une ou plusieurs des revendications 1 à 7, caractérisé en ce que, avant leur évacuation, les gros morceaux de matière en vrac sont broyés.

**9.** Procédé selon l'une ou plusieurs des revendications 1 à 8, caractérisé en ce que l'amenée de la matière en vrac est pilotée en fonction de l'humidité et/ou de la température du matériau à l'extrémité de la section de réaction.

**10.** Procédé selon l'uns ou plusieurs des revendications 1 à 9, caractérisé en ce que l'amenée de la matière en vrac est pilotée en fonction du degré de remplissage de la zone de réaction principale (II).

**11.** Procédé selon l'une ou plusieurs des revendications 1 à 10, caractérisé en ce que la vitesse de transport est pilotée en fonction de la température et/ou de l'humidité et/ou des caractéristiques chimiques en sortie de la zone de réaction principale (II) ou de la zone d'agglomération (III).

**12.** Equipement destiné à la mise en oeuvre du procédé selon l'une des revendications 1 à 11, destiné au conditionnement de résidus de centrales électriques sous forme de matières en vrac, en particulier des cendres de filtration de centrales électriques, par extinction de la fraction chaux par addition d'humidité, puis par une humidification plus poussée de la matière en vrac, constitué d'un réacteur rotatif, de dispositifs d'amenée et d'évacuation de la matière en vrac et d'un dispositif destiné à l'amenée d'humidité, caractérisé en ce que le réacteur est constitué d'au moins un tambour cylindrique, essentiellement ouvert sur ses deux faces frontales, tambour qui tourne autour d'un axe légèrement incliné par rapport à l'horizontale, et/ou d'au moins un tambour conique, tronconique, qui tourne autour d'un axe horizontal ou légèrement incliné par rapport à l'horizontale ; que le rapport de la longueur au diamètre intérieur le plus grand du tambour est supérieur à 2:1, de préférence supérieur à 4:1 ; et que la paroi intérieure du tambour est, au moins sur une partie de la longueur du tambour, revêtue d'un matériau élastique ; et que, en amont de l'orifice d'entrée du tambour ou dans la zone d'entrée du tambour, on prévoit des dispositifs de mélange et une amenée d'eau destinée au mélange de la matière en vrac et de l'eau.

**13.** Equipement selon la revendication 12, caractérisé en ce que le matériau élastique est disposé à une certaine distance de la paroi du tambour.

**14.** Equipement selon la revendication 12 ou 13, caractérisé en ce qu'il comporte au moins deux tambours cylindriques pénétrant l'un dans l'autre et ayant des diamètres différents.

**15.** Equipement selon la revendication 14, caractérisé en ce que les deux tambours sont entraînés en rotation avec des vitesses de rotation différentes.

**16.** Equipement selon l'une des revendications 12 à 15, caractérisé en ce que le matériau élastique, de préférence constitué de bandes élastiques, est disposé sur le côté intérieur du tambour sous la forme d'un haubanage polygonal.

**17.** Equipement selon l'une des revendications 12 à 16, caractérisé en ce qu'une barre de maintien traverse le tambour et court essentiellement parallèlement à son axe de rotation, et que des dispositifs de mesure ainsi que des conduites d'amenée pour l'eau et l'air de refroidissement sont disposés sur la barre de maintien.

**18.** Equipement selon la revendication 17, caractérisé en ce qu au moins un tube d'amenée de l'eau et/ou de l'air de refroidissement forment la barre de maintien.

**19.** Equipement selon l'une des revendications 12 à 18, caractérisé en ce que des billes à mouvement libre sont présentes entre le haubanage élastique et la paroi intérieure du tambour.

**20.** Equipement selon l'une des revendications 12 à 19, caractérisé en ce qu'un mélangeur ou un outil mélangeur est disposé dans la zone d'entrée de l'équipement.

**21.** Equipement selon l'une des revendications 12 à 20, caractérisé en ce qu'un mélangeur ou des outils mélangeurs sont disposés dans la zone de sortie de l'équipement.

**22.** Equipement selon l'une des revendications 12 à 21, caractérisé en ce que le ou les tambours et/ou les mélangeurs montés en amont et/ou en aval sont installés sur des dispositifs de pesage.

**23.** Equipement selon l'une des revendications 12 à 22, caractérisé en ce qu'on prévoit, en amont de l'entrée de l'équipement et en aval de la sortie de l'équipement, des dispositifs destinés à mesurer le débit de matière.

24. Equipement selon l'une des revendications 13 à 23, caractérisé en ce qu'il est équipé d'un orifice de sortie pouvant être obturé.

25. Equipement selon l'une des revendications 13 à 24, caractérisé en ce que ses différents composants sont disposés dans la structure de soutènement du silo à matière en vrac disposée au-dessus.

Fig.1

Fig.2

Fig.3

Fig. 4

Fig.5

Fig.6

Fig.7

Fig.8

Fig. 9

Fig. 10

18

Fig.11

F i g. 12

F i g.13

# F i g. 14

# F i g.15